# EUROPEAN PATENT APPLICATION

(11) **EP 3 276 506 A1**
(43) Date of publication of application: **31.01.2018**
(21) Application number: 17169501.8
(22) Date of filing: 04.05.2017
(51) Int. Cl.: G06F 17/30

(54) **METHOD OF PROCESSING A BLOCK OF TEXT IN A WEB LAYOUT**

(30) Priority: 28.07.2016 GB 201613052
(71) Applicant: Turtl Surf & Immerse Limited, London EC1V 2NX (GB)
(72) Inventor: Mason, Nick, St. Albans, AL3 5NQ (GB)
(74) Representative: Noble, Frederick

(57) **Abstract**

A computer-implemented method of displaying a web page in a web browser, where the web page includes one or more blocks, each block including information about the content of the block and also the required vertical height of the block,
the method including the processing of each block by carrying out the steps of:
rendering the content of the block in the browser;
determining the actual vertical height of the block as rendered in the browser
comparing the actual vertical height of the block with the required vertical height of the block;
if the difference between the actual and required vertical heights is not within a predetermined tolerance, making adjustments to display properties of the content of the block to alter the actual vertical height of the block.

## Description

The present invention relates to processing a block of text in a web layout to achieve a consistent display on a wide range of browsers and devices.

### BACKGROUND TO THE INVENTION

HTML (Hypertext Markup Language) is designed to allow the definition of the content of web pages, which can then be displayed on multiple browsers. HTML also includes some ability to define aspects of the presentation of a page, although in the last 15 years at least this has been substantially supplanted by the use of CSS (Cascading Style Sheets) to define presentation, leaving HTML to define only content.

Whether or not presentation cues are included in HTML or accompanying CSS files for a particular web page, the actual appearance of a web page almost always varies to some extent between browsers. The rendering engine of the browser will make hundreds of decisions to determine, for example, the shape, height and width of each character. This is by design, and it allows the user reading the web page to exercise some level of control over the appearance to suit his personal needs or preferences. For example, he may use the 'zoom' tool on the browser to increase or reduce the text size, or adjust the display colours for higher contrast. The browser will also take account of the size of the screen or window to display the web page appropriately on the device.

This system, where content is defined by the author and presentation is left (to some extent) with the reader, subject to presentational 'cues' from the author, generally works well on traditional 'scrolling' websites where content flows down the page until it has all been displayed. However, with more complex types of layout, problems arise. For example, in a multi-column layout it may be important for all of a particular block of text to start and end in the first column. It would ruin the layout if this block of text were to spill into the next column. This is because all subsequent elements will have to move, causing unintended and ugly rendering. However, it is difficult to control the vertical height of blocks of text because the width of characters in particular is generally determined by the rendering engine of the browser. If one browser sets the character width slightly wider than another, then the text will flow onto more lines and the block of text will require more vertical space.

Of course, it is possible to use alternative technologies to specify layouts of pages, or parts of pages, exactly. A simple way of doing this is to present the page as an image. At one time it was reasonably common to use Adobe (RTM) Flash to create whole web sites where the presentation as well as the content was exactly defined. However, these techniques have serious drawbacks. Firstly, they reduce the ability of the user and the user's browser to control the layout of the page to such an extent that beneficial changes, for example to take account of the screen size or user's needs, cannot be made. They may also prevent ordinary browser tools such as the 'forward' and 'back' navigation buttons, bookmarks, searching within a page, printing, etc. from working correctly.

Another technique which has been used to try to ensure consistent layout across a range of browsers is to test the web page in multiple browsers, and add browser-specific presentation cues to the web page. For example, the web server may be configured to send one style sheet in response to requests from the Internet Explorer (RTM) web browser, and another slightly different style sheet in response to requests from the Firefox (RTM) web browser. Alternatively browser detection and choice of presentation properties may be done using JavaScript running on the web page. However, this technique relies on manually determining multiple configurations for different browsers, which is time-consuming and tedious. The result is also not very comprehensive, because there is inevitably a limit to the number of different browsers and versions of browsers which can reasonably be accounted for. New browsers and versions will require this work to be repeated

It is an object of the present invention to control the vertical space taken up by parts of a web page, whilst retaining the ordinary controls and accessibility available with HTML / CSS web pages.

### SUMMARY OF THE INVENTION

According to the present invention, there is provided a computer-implemented method of displaying a web page in a web browser, the web page including one or more blocks, each block including information about the content of the block and also the required vertical height of the block;
the method including processing each block by carrying out the steps of:
rendering the content of the block in the browser;
determining the actual vertical height of the block as rendered in the browser;
comparing the actual vertical height of the block with the required vertical height of the block;
if the actual and required vertical height are not within a predetermined tolerance, making adjustments to display properties of the content of the block to alter the actual vertical height of the block.

The required vertical height of the block may be defined and stored within the web page source in absolute or relative terms, for example, it may be given as a number of pixels or millimetres, or may be defined as a percentage of the screen or window height.

Each block is rendered in the usual way by the browser, taking into account any presentation cues provided in the page source, most likely as part of a CSS style sheet. The actual vertical height of the block as rendered will depend on the presentation cues on the web page, and also to some extent on the rendering engine and browser being used, and the settings of that browser. When the block is rendered the actual vertical height is determined. This is compared against the required vertical height of the block as stored in the web page, and if the actual and required vertical heights do not match (within the predetermined tolerance) then display properties are adjusted to bring the actual height in line with the vertical height. The display properties which are adjusted may include, for example, combinations of letter spacing, word spacing and font size. The adjustments are preferably made iteratively, on a small scale which will usually be undetectable to most users. For example, if the comparison identifies that the actual height of the block is too large, then the letter spacing may be reduced by, say, 2 pixels. The actual height is then measured again and the comparison is made. If the block is still too large, then another change could be made, for example reducing the font size very slightly. The iterative process of adjustment and re-measurement ensures that only minimal changes are made to the display properties of the block in order to adjust its vertical height correctly. Small changes to multiple properties may be made, which may be less noticeable than making a larger change to a single property. For example, reducing both the character spacing and line spacing by a small amount may be enough to reduce the actual vertical height to the required vertical height, but less noticeable than reducing the line spacing alone by a larger amount.

The process of measuring the actual vertical height of a block, making the comparison and (iteratively) making changes to display properties is preferably implemented by JavaScript embedded in the web page.

Preferably, the required height of the block is given in the height property of the block. The process of measuring the actual height of the block and comparing it with the required height may include the steps of comparing the actual height of the the block (the scrollHeight property) to the required height to detect if the block is too tall (i.e. the scrollHeight is greater than the height property). If the block is not too tall then the process may further include the step of removing the height property from the block (having first saved its value for later recall), and then comparing the actual height of the block (the scrollHeight property) to the required height to detect if the block is too short.

A web page can be assembled in the usual way, using any one of the wide variety of available web design packages, setting the height property for each element to achieve the desired layout. JavaScript can then be added to the page which effectively enforces the height property applied to each block as an exact height of the block, with text filling the block. This is in contrast to the known use of the height property, which defines the height of the block, but no guarantee that text will fill the block, or that the text will all fit within the block.

When a measurement is made of the actual height of the block (for example by reading the scrollHeight property from the browser), the result may preferably be rounded to the nearest multiple of the height of a line of text. The height of a line of text can be obtained separately from the browser. Rounding the block height to the nearest multiple of the line height ensures consistent reporting of the block height, despite different browsers measuring block height in different ways.

Preferably, required heights are automatically adjusted in response to the zoom control of the browser being adjusted. For example, if the zoom control is set at 50% (i.e. to make the text size 50% smaller), then all required heights will be adjusted to make them 50% smaller as well. This ensures that the layout is preserved when the text size is changed by the user with the browser's zoom control.

The required vertical height of a block is embedded in the web page source when it is created. Preferably, this is done automatically using layout software which allows the author to set up the layout on the screen in the same way as a 'what-you-see-is-what-you-get' desktop publishing package. The author sets up the layout, and the height of each block of text as seen by the author on their screen is recorded and stored in the web page source. Preferably, this is done by setting the height property of each block.

It is envisaged that the invention is primarily useful to control the height of blocks of text, or blocks containing mostly text, although some embodiments may be applicable to blocks consisting of or containing other types of content, for example equations or tables. The vertical height may be stored and measured, and display properties may be adjusted, in a similar way.

The invention allows normalisation of the height of each block across all browsers and devices. It makes it possible to design multiple-column layouts for web pages, which display consistently across a range of browsers without having to hard-code different instructions for different browsers, and without making ordinary user-adjustments provided by the browser unavailable.

### DESCRIPTION OF THE DRAWINGS

For a better understanding of the present invention, and to show more clearly how it may be carried into effect, a preferred embodiment will now be described with reference to the accompanying drawings, in which:
Figure 1 shows a block of text, part of a web page, as it is laid out be the page author;
Figure 2 shows the block of text as rendered in first and second web browsers;
Figure 3 shows the block of text as rendered by the second web browser after each of two consecutive iterations of the adjustment step in the method of the invention.

### DESCRIPTION OF THE PREFERRED EMBODIMENT

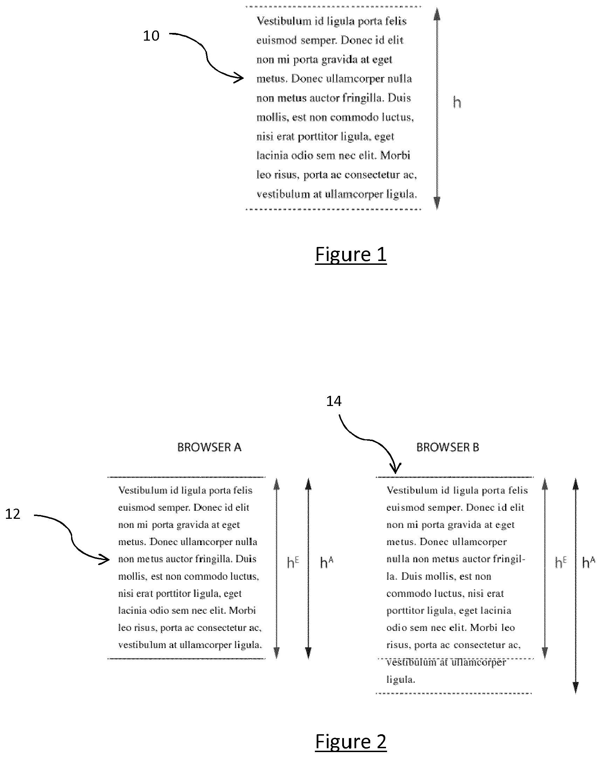

Referring firstly to Figure 1, an example block of text is indicated at 10. The block of text 10 forms part of a web page, which is being designed by an author in 'what-you-see-is-what-you-get' layout software. The layout software allows the author to set the height *h* of the block of text, bearing in mind the overall layout of the web page and the other elements on the page. The required height *h* of the block of text is then stored, along with the content of the block, as part of the page source. The page source as generated and stored by the layout software also includes JavaScript code which automatically runs in client browsers when the web page is displayed. The JavaScript code carries out the steps of the method of the invention as described below.

When the page is first downloaded by a browser, the block of text is rendered in the usual way. Although the page source may include various presentational cues, the rendering of the block of text will vary to some degree depending on the browser being used.

In particular, the height property will be used by the browser to set the height of each block, but the text within the block may not always fill the block, i.e. the text may be too short. On the other hand, if the text is too long to fit in the block then the text will 'overflow' the block.

In Figure 2, two slightly different renderings of the same block are shown side-by-side. Browser A's rendering 12, on the left, has resulted in a slightly shorter actual vertical height *h^{A}* than Browser B's rendering 14, on the right. This is because of slight differences in character spacing, line spacing, font size, and hyphenation practice between Browser A and Browser B. Once the page has been loaded and rendered, the JavaScript code embedded in the page runs, and initially queries the browser to determine the actual vertical height *h^{A}* of the block of text. The actual vertical height *h^{A}* is determined by reading the scrollHeight property of the block from the browser. If the scrollHeight property is larger than the height property, then the block is too tall. Otherwise, the height property will be removed from the block, causing it to shrink to the height of its contents, and then scrollHeight read again. If scrollHeight is shorter than the required height, then the block is too short.

The JavaScript code carries out a comparison between the 'measured' actual height *h^{A}* and the required / 'expected' height *h^{E}* which is defined in the page source. In the case of Browser A in this example, *h^{A}* is the same as *h^{E}* and therefore no adjustment is necessary. However, in the case of Browser B, *h^{A}* is substantially (more than the predetermined tolerance threshold) greater than *h^{E}* and therefore the adjustment step will have to be carried out.

Note than *h^{A}* is said to be the same as *h^{E}* if *h^{A}* rounded to the nearest multiple of the line height is the same as *h^{E}*. The line height can be determined from the browser separately.

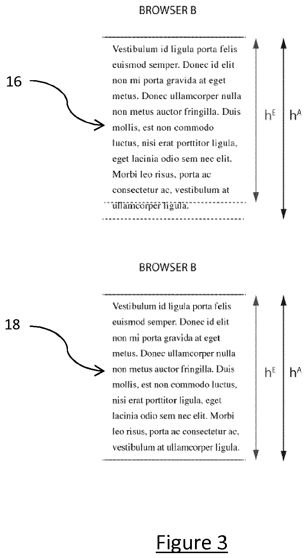

Small adjustments to properties of the text in the block are made iteratively in order to reduce *h^{A}* so that it is within the predetermined tolerance margin when compared with *h^{E}*. First, the letter spacing is reduced by 2 pixels and the block re-rendered. The re-rendered block 16 is shown in Figure 3. The measurement of the actual height *h^{A}* of the block is carried out on the re-rendered block 16, and the comparison with the required height *h^{E}* is made. In this case, despite the adjustment, *h^{A}* is still substantially greater than *h^{E}*. The adjustment and re-measurement step is therefore iterated again. In this example the adjustment is a further reduction in letter spacing by 2 pixels, but in different embodiments the adjustments in each iteration may not necessarily be the same. For example, it may be better to make small changes to each of line spacing, letter spacing, and font size than it is to make a relatively large change only to letter spacing. The adjustment may be chosen based on one or more rules to prioritise the types of changes. For example, a rule may state that the letter spacing will never be changed by an overall amount of more than 4 pixels. If the actual height of the block of text is still too large when the letter spacing has been reduced by a total of 4 pixels, another adjustment will have to be made in the next iteration, for example a reduction to the font size.

The invention allows a multi-column layout to be reliably displayed on a wide range of web browsers and devices, whilst still sending standard HTML to the browser and not relying on technologies which unacceptably hinder the user's ability to customise the display and use accessibility tools. In particular, the invention allows for a wide range of different layouts, other than the traditional vertically-scrolling layout. For example, a layout which scrolls horizontally, like turning the pages of a book, can be reliably implemented by accurately controlling the vertical size of blocks of text.

The embodiments described above are provided by way of example only, and various changes and modifications will be apparent to persons skilled in the art without departing from the scope of the present invention as defined by the appended claims.

## Claims

1. A computer-implemented method of displaying a web page in a web browser,
the web page including one or more blocks, each block including information about the content of the block and also the required vertical height of the block,
the method including the processing of each block by carrying out the steps of:
rendering the content of the block in the browser;
determining the actual vertical height of the block as rendered in the browser
comparing the actual vertical height of the block with the required vertical height of the block;
if the difference between the actual and required vertical heights is not within a predetermined tolerance, making adjustments to display properties of the content of the block to alter the actual vertical height of the block.

2. A method of displaying a web page in a web browser as claimed in claim 1, in which the required height is stored in the *height* property of the block and in which determining the actual vertical height of the block and comparing it to the required vertical height of the block comprises the steps of:
reading the *scrollHeight* property of the block from the browser;
comparing the *scrollHeight* property to the *height* property, and if the *scrollHeight* property is greater than the *height* property then determining that the block is too tall; otherwise
removing the *height* property from the block;
reading the *scrollHeight* property of the block from the browser;
comparing the *scrollHeight* property and the required height, and if the *scrollHeight* property is smaller than the required height then determining that the block is too short.

3. A method of displaying a web page in a web browser as claimed in any of claims claim 1 or claim 2, in which the height of a line of text in the block is determined from the browser, and the measured actual vertical height is rounded to the nearest multiple of the line height before being compared with the required block height.

4. A method of displaying a web page in a web browser as claimed in any of claims 1 to 3, in which the display properties which are adjusted include letter spacing.

5. A method of displaying a web page in a web browser as claimed in any of the preceding claims, in which the display properties which are adjusted include word spacing.

6. A method of displaying a web page in a web browser as claimed in any of the preceding claims, in which the display properties which are adjusted include font size.

7. A method of displaying a web page in a web browser as claimed in any of the preceding claims, in which the display properties which are adjusted include more than one of letter spacing, word spacing and font size.

8. A method of displaying a web page in a web browser as claimed in any of the preceding claims, in which the steps of rendering, determining actual height, comparing and adjusting are carried out iteratively until the actual height is within the predetermined tolerance of the required height.

9. A method of displaying a web page in a web browser as claimed in claim 8, in which a different display property is adjusted on each iteration of the method.

10. An apparatus comprising means adapted to perform the method of any preceding claim.

11. A program for controlling an apparatus to perform a method as claimed in any of claims 1 to 9, carried on a carrier medium such as a storage medium or a transmission medium.

12. A method substantially as described herein, with reference to and as illustrated in Figures 1 to 3 of the accompanying drawings.
